(19) Europäisches Patentamt
European Patent Office
Office européen des brevets

(11) Publication number: **0 023 158**
**B2**

(12) # NEW EUROPEAN PATENT SPECIFICATION

(45) Date of publication of the new patent specification: **02.07.86**

(21) Application number: **80302503.0**

(22) Date of filling: **23.07.80**

(51) Int. Cl.[4]: **C 07 C 93/04,** C 07 C 93/06, C 08 G 59/50, C 08 G 18/08, C 08 G 18/32, C 09 D 5/24

(54) **Polyamines, process for the preparation thereof, substituted ammonium compounds prepared therefrom and a method for producing a cured piece.**

(30) Priority: **23.07.79 US 59933**

(43) Date of publication of application: **28.01.81 Bulletin 81/4**

(45) Publication of the grant of the patent: **08.06.83 Bulletin 83/23**

(45) Mention of the opposition decision: **02.07.86 Bulletin 86/27**

(84) Designated Contracting States: **AT BE CH FR GB IT LI NL SE**

(56) References cited:
**DE-A-2 603 666**
**DE-B-2 426 996**
**FR-A-1 357 258**
**FR-A-1 507 179**
**FR-A-1 524 755**
**FR-A-2 238 736**
**FR-A-2 388 022**
**GB-A-1 088 496**
**US-A-3 716 402**
**US-A-3 811 911**
**US-A-3 922 253**

(73) Proprietor: **HENKEL CORPORATION, 7900 West 78th Street, Minneapolis Minnesota 55435 (US)**

(72) Inventor: **Floyd, Don Edgar, 2672 Parkview Boulevard, Robbinsdale Minnesota 55422 (US)**

(74) Representative: **Cockbain, Julian, Frank B. Dehn & Co. Imperial House 15- 19, Kingsway, London WC2B 6UZ (GB)**

**EP 0 023 158 B2**

## Description

The present invention relates to polyamines suitable for use in electrodeposition such as is practiced in the automotive industry.

Electrodeposition is defined as the process of depositing a film forming material through the use of electrical potential. There are two forms of electrodeposition. The first and most widely known and used form is that of anodic deposition wherein the negatively charged film forming material is attracted to the anode where the negative charge is removed and the material is plated out. The second form of electrodeposition is known as cationic deposition wherein the film forming material contains a positively charged group which is attracted to the cathode. At the cathode thepositive charge of the film forming material is neutralized by the electrons flowing through the electrode and the film is deposited thereon. In both cationic and anodic electrodepositions a second cure, usually thermal, is employed to fix the film forming material onto the desired surface. In eitherinstance, of course, the substrate or piece to which the film is applied acts as an electrode in the reaction.

Considerable discussion of the subject of both cationic and anodic electrodeposition is found in "THE CHEMISTRY OF BINDERS FOR ELECTRODEPOSITION" found in PROGRESS IN ORGANIC COATINGS, 7 (1979), pages 1-77. Specific discussions of cationic electrodeposition are found in United States Patent No. 3,922,253 (issued 25 November 1975 to Jerabek *et al).*

In technical fields outside the field of electrodeposition coating, various polyamines produced as epoxide-amine adducts are known: French Patent No. 1 507179 (issued 20 November 1967 to Shell) disclosed certain microbicidal polyamines having amine nitrogens located in side chains attached to the backbone of the polyamine molecule; French Patent No 1 524755 (issued 1 April1968 to Hoechst) disclosed antistatic polyamines produced by reaction of certain diepoxides with primary or secondary amines; French Patent Application Publication No 2388022 (Kao Soap - published17 November 1978) disclosed a bitumen-based road surfacing composition in which a polyamine is produced by reaction of an epoxide with an amine hardening agent; and US Patent No. 38 11 911 (issued 21 May 1974 to Doi) disclosed epoxide-amine polymers useful for surfacing paving material and produced by the linear polymerization of oleylamine and a diepoxide in a 1:1 molar ratio.

US Patent No 3922253, referred to above, discloses electro-depositable coatingcompositions produced by the reaction of a polyepoxide-amine adduct (a polyamine) with a partially blocked organic polyisocyanate. The reaction of the polyepoxide with the polyisocyanate can becarried out before or after adduction with the amine. However, the use of partially blocked polyisocyanates does occasionally lead to undesirable crosslinking as a result of unblocking occurring before the electrodeposition of the coating compositions.

United States Patent No. 3,637,618 (issued 25 January 1972 to May) disclosed compositions comprising a mixture of a curable unsaturated polyester which is formed from anormally liquid polyepoxide and an ethylenically unsaturated organic carboxylic acid and a second, normally solid, polymeric material possessing a plurality of epoxy groups. United States Patent No. 3,876,518 (issued 8 April 1975 to Borden *et al)* describes amine derivatives of acrylated epoxidized soybean oil which may be cured by radiation. Polyepoxide products which are formed from a blend of an epoxide resin and a polyacrylate or polymethacrylate and which are stated to have rapid low cure properties with polyamines are described in United States Patent No. 4,051,195 (issued 27 September 1977 to McWhorter).

In United States Patent No. 3,617,458 (issued to Brockman on 2 November 1971)there are described crosslinkable coating compositions derived from an unsaturated compound containing a carboxylic acid, an epoxidized material and a cornpound which contains a pendant amine group. Bosso *et al* in United States Patent No. 3,839,252 (issued 1 October 1974) describe compositions which are stated to be non-gelled water-dispersible epoxy resins containing oxyalkylenegroups. United States Patent No. 3,804,786 (issued to Sekmakas on 16 April 1974) describes water-dispersible cationic polyurethane resins containing diglycidyl ether resins.

United States Patent No. 3,935,087 (issued to Jerabek *et al* on 27 January1976) describes coating compositions with good throwing power, comprising epoxy resins with blocked isocyanates and amine salts. United States Patent No. 3,963,663 (issued to Sekmakas on 15June 1976) describes corrosion-resistant thermosetting resins prepared by combining the water-dispersible foam of an acid and an amine resin and a phenolic resin. McGinniss in United States Patent No.3,975,251 (issued 17 August 1976) describes heat curable coating compositions containing a polymerhaving pendant amine groups.

Marchetti *et al* in United States Patent No. 3,975,250 (issued 17 August 1976) describe electrodeposition compounds containing mono-substituted urea and urethane linkages. The compounds are also stated to contain epoxy and acid solubilized amine groups. Cathodically depositable coating compositions are described by Bachmann *et al* in United States Patent No. 3,729,435 (issued 24 April 1973). Jerabek in United States Patent No. 4,031,050 (issued 21 June 1977) describes cationic electrodepositable compositions containing a blockedisocyanate and the acid salt of an adduct of amine and a polyepoxide. compounds produced by the neutralization or substantial neutralization of polyamines (as defined above) with lactic and/or acetic acids or the anhydrides thereof as well as compositions comprising such ammonium compounds and a fully blocked polyisocyanate compound.

The compositions of the present invention are useful in that, after having been attracted to a piece functioning as a cathode, the film may then be cured by conventional chemicalmeans to form a tough water resistant flexible coating.

The first component to be discussed in the present invention is that of the difunctional epoxy compound. By difunctional it is meant that the compound of formula II will contain at least two oxirane groups capable of

forming a bond with a reactant material such as an amine. It is, of course, included within the scope of the present invention that the difunctional epoxy compoundmay contain an epoxy functionality which has previously been reacted (for example by condensation with itself) provided that at least two unreacted oxirane groups are still present in the molecule.

Basically two specific groups of epoxy compounds are highly desirable compounds for use in the process of the present invention. These materials, which correspond to Bisphenol A and hydrogenated Bisphenol A epoxides, are shown below:

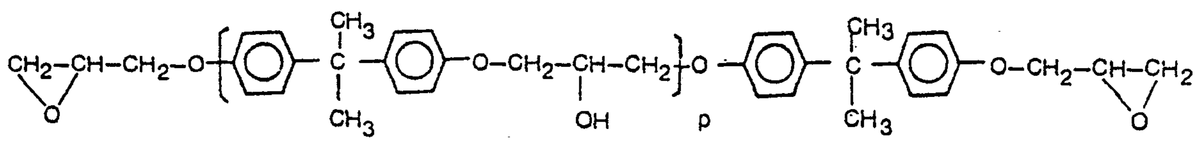

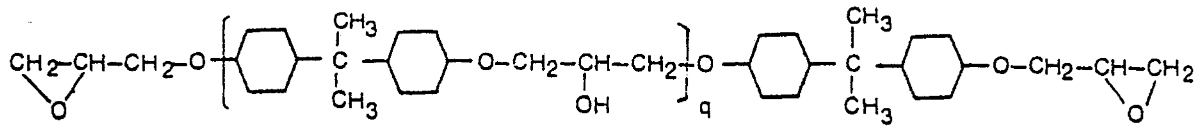

and consequently B and B' in the amines of formula I produced thereby will represent radicals selected from radicals of formulae VI and VII

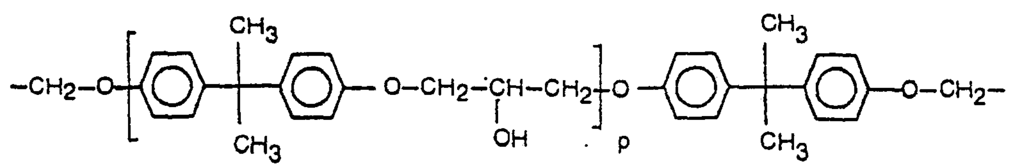 (VI)

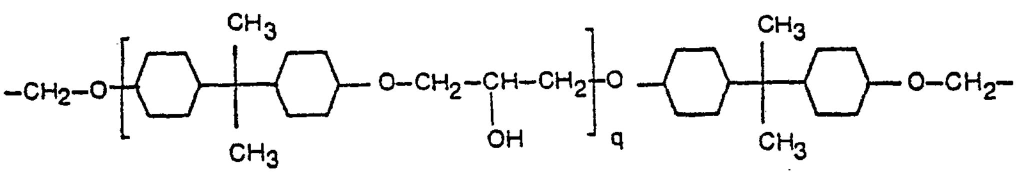 (VII)

(In the above formulae p and q are integers having values preferably of 2 or less, advantageously 0 the tertiary amine is the one which is neutralized as hereinafter described. The central positioning allows the charge distribution in the molecule such that the film will be evenly deposited upon the piece to be coated.

As mentioned above, the compounds of the present invention are primarily useful in cationic electrodeposition wherein the tertiary atom is reacted with an acidic materialsuch as lactic or acetic acid or their anhydrides in an amount sufficient substantially to neutralize the reaction product giving a substituted ammonium salt, prior to the electrocoating. This technology has also been amply described in the art.

According to a yet still further aspect of the present invention we provide amethod for the production of a cured piece, which method comprises the following steps:

(a) neutralizing polyamines as defined above with an acidic material, preferably lactic and/or acetic acids or the anhydrides thereof;

(b) mixing the neutralized substituted ammonium compounds as prepared in stepabove with an amount of a fully blocked polyisocyanate sufficient to react with the remaining amine hydrogens and the hydroxyl groups present in the said neutralized compounds;

(c) applying the mixture as prepared in step (b) above to a piece functioningas a cathode in a bath through which an electric current is passing, and thereby forming a coating on the said piece; and

(d) removing the coated piece from the bath and applying a heat cure, and thereby producing the cured piece.

The compounds of the present invention as noted above most conveniently are utilized as the substituted ammonium salts. It is also highly desirable that a fully blocked isocyanate be utilized with the neutralized reaction product to effect cross-linking, thus firmly adheringthe coating to the piece. Suitable examples of

isocyanates are as follows.

Suitable polyisocyanates include ethylene diisocyanate, trimethylene diisocyanate, hexamethylene diisocyanate, propylene-1,2-diisocyanate, ethylidene diisocyanate, cyclopentylene-1,3-diisocyanate, the 1,2-, 1,3- and 1,4-cyclohexylene diisocyanates, the 1,3-, and 1,4-phenylene diisocyanates, polymethylene polyphenylene-isocyanates, the 2,4-, and 2,6-toluene diisocyanates, the 1,3-, and 1,4-xylylene diisocyanates, bis(4-isocyanatophenyl)methane, 4,4'-diphenyl-propane diisocyanates, bis(2-isocyanatoethyl) carbonate, 1,8-diisocya nato-pmethane, 1 -methyl-2,4-diisocyanato-cyclohexane, the chlorophenylene diisocyanates, naphthalene-1,5-diisocyanate, triphenyl-methane-4,4',8"-triisocyanate, isopropylbenzene-alpha-4-diisocyanate, 5-6,-bicyclo[2.2.2.]hept-2-ene diisocyanate and 5,6-diisocyanatobutylbicyclo [2.2. 11 ]hept-2-ene.

Of particular interest in the present invention are trimethyl hexamethylene diisocyanate available from VEBA, an aliphatic C—36 diisocyanate sold under the trademark DDI 1410and available from the Henkel Corporation, (generally diisocyanates having from 12 to 40 carbons in the aliphatic radical may be used in the present invention), toluene diisocyanate available from AlliedChemical, isophorone diisocyanate available from VEBA and an aliphatic triisocyanate sold under thetrademark Desmodur N and available from Mobay. Desmodur N is more particularly defined as the triisocyanate adduct of 3 moles of hexamethylene diisocyanate and water having an isocyanate equivalentweight of 191 grams. Other adducts or prepolymers of the polyisocyanate include those sold under the trademarks Desmodur L and Mondur CB which are the adducts of toluene diisocyanate. The foregoing materials have an isocyanate equivalent weight of approximately 250 grams.

The amount of the isocyanate utilized in the process of the present inventionwill be that amount theoretically necessary on an equivalent basis to cure from 90 to 110%, preferably from about 95% to 105%, of the available hydroxyl and amine groups remaining on the substitutedammonium compounds. Of course, in the coating art it is more desirable to leave unreacted isocyanate groups than to have unreacted hydroxyl or amine groups. This is due to the fact that the unreacted hydroxyl groups really provide nothing in the form of stability in the coating whereas the amine groups if unreacted may chalk thereby discoloring the coating. If unreacted isocyanate radicals are present, however, these materials will necessarily moisture cure and thus cross-link from one isocyanate to another thus providing a film which is more stable than one in which the isocyanate is notpresent in sufficient quantity.

In order to utilize the isocyanate in an aqueous cationic deposition bath andsuch that the product in any event does not gel prematurely, it is necessary as previously noted that the isocyanate be fully blocked. By blocking is meant that any particular agent which will react withthe isocyanate so that the isocyanate is not free to react with the amine hydrogen or the hydroxyl of thesubstituted ammonium compound but yet will disassociate itself leaving the isocyanate radical freeto react is required. Suitable examples of blocking agents useful in the present invention include aliphatic, cyclo-aliphatic, aromatic, alkyl, monohydric alcohols and phenolic compounds. Specifically desirable are lower aliphatic alcohols, such as, for example, methyl, ethyl, chloroethyl, propyl, butyl, amyl, hexyl, heptyl, octyl, nonyl, 3,3,5-trimethylhexanol, decyl, and lauryl alcohols. The cycloaliphatic alcohols useful include, for example, cyclopentanol and cyclohexanol; the aromatic alkyl alcohols useful include, for example, phenylcarbinol, methylphenylcarbinol, ethylene glycol monoethyl ether and ethylene glycol monobutyl ether. The phenolic compounds useable as blocking agents include materials such as phenol itself, and substituted phenols in which the substituents do not adversely effect the coating operations. Examples include cresol, xylenol, nitrophenol chlorophenol, ethyl phenol, *t*-butyl phenol, and 2,5-di-*t*-butyl-4-hydroxy toluene. Minor amounts of higher molecular weight, relatively non-volatile monohydric alcohols may be used, if desired, to serve as plasticizers in the coatings provided by this invention.

Additional blocking agents include tertiary hydroxylamines such as diethylethanolamine and oximes such as methyl ethyl ketone oxime, acetone oxime and cyclohexanone oxime. Use of oximes is particularly desirable because polyisocyanates blocked with oximes uncap at relatively low temperatures without the need for externally added urethane forming catalyst such as the tin catalyst described below.

In particular the highly desirable blocking agents utilizable in the present invention are butyl alcohol, 2-hydroxyethyl ether of ethanol, 2-ethylhexanol and mixtures thereof.

As previously described the compositions of the present invention when utilized in a cationic coating provide colorless compounds having great flexibility and high water resistance.

In use, the neutralized substituted ammonium compounds and a sufficient amount of the blocked isocyanate are added at a combined weight of 7% to 20% preferably 8% to 18% by weight, in an aqueous electrodeposition bath. The piece to be coated functions as the cathode and the action of the neutralized substituted ammonium compound is sufficient to carry the blocked isocyanate and any pigments included to the piece. A heat cure following deposition fixes the pigment through unblocking the isocyanate which then cures the hydroxyl and amine groups on the piece.

The following Examples are provided to illustrate the present invention without serving to limit the scope of protection sought therefor.

Example I

Polyamines of the present invention are prepared in accordance with the process of the present invention by heating a mixture of 0.4 mole of oleyl amine (106.8 grams) and 0.2 mole of Epon 828 (76,0 grams) [Epon 828 is the trademark for an aromatic epoxy compound having an epoxide equivalent value of from about 180 to 195 (average 190) and a viscosity of from about 100 to 160 poise at 25 degrees C], by adding these materials to a 3 necked flask at 150 degrees C under a nitrogen atmosphere for one hour with constant stirring.

The reaction product is then utilized in the amount of 155.4 grams, by dissolving it in 62.2 grams of methyl

isobutyl ketone at 50 to 60 degrees C, and then to this solution isadded 4.25 grams of dibutyl tin dilaurate and 63.24 grams of a blocked isocyanate prepared by thereaction of toluene diisocyanate with 2-hydroxyethyl ether of ethanol. This blocked isocyanate isprepared from one equivalent of an 80:20 mixture of 2,4- and 2,6-toluene diisocyanate and one equivalent and a 10% excess of (i.e. 99 grams of) dry 2-hydroxyethyl ether of ethanol with two drops of dibutyl tin dilaurate. The purpose of the dibutyl tin dilaurate is as a catalyst for the cross-linking by the isocyanate upon its being released from the blocking agent. The 2-hydroxyethyl ether of ethanol isslowly dropped into a stirred mixture of the reagents while the temperature is maintained at 55—75degrees C. Heating was continued at approximately 65 degrees C for an additional hour to obtain a colorless viscous liquid.

The mixture of the blocked isocyanate and the reaction product is dispersed byadding 36 grams of 85% lactic acid and 2,876 grams of deionized water with stirring.

Example II

Polyamines of the present invention are next prepared utilizing a ratio of 3 moles of oleyl amine and 2 moles of Epon 828 as previously described in Example I. The weights employed are 208 grams of the oleyl amine and 197.6 grams of the Epon 828.

208 grams of the reaction product are dissolved in 83.2 grams of warm methyl isobutyl ketone at 50—60 degrees C and to the solution is added 5.6 grams of the dibutyl tin dilaurate and 92 grams of the toluene diisocyanate blocked with 2 ethylhexanol.

This particular blocked isocyanate is the material described in Example I with the exception that it has been heated with 1 equivalent including a 10% excess of 2-ethylhexanol and3 to 4 drops of dibutyl tin dilaurate at 70 degrees Centigrade plus or minus 5 degrees C for one hour.

The mixture of the blocked isocyanate and the reaction product is then dispersed by adding 24 grams of glacial acetic acid and thereafter adding 3,708 grams of deionized water with thorough stirring.

Example III

In this Example the polyamines of Example II are combined with the blocked isocyanate of Example I.

That is, 208 grams of the polyamines prepared from the 3 moles of oleyl amineand 2 moles of the Epon 828 as in Example II are added to 83.2 grams of methyl isobutyl ketone to dissolve the resin utilizing slight warming. Then 74.4 grams of the toluene diisocyanate blockedwith the 2-hydroxyethyl ether of ethanol is added along with 5.4 grams of dibutyl tin dilaurate. Thismixture is dispersed by adding, with thorough stirring, 42.4 grams of 85% aqueous lactic acid and 3,901 grams of deionized water.

Example IV

The cationic dispersions of Examples I, II and III are each in turn placed inelectrodeposition cells made by Ransburg and identified as Ransplater Model 600 AA. This device has been modified by reversing the polarity so that is is a cationic coating apparatus rather than the anionic apparatus as was originally intended. The coatings are effected by applying direct current to steel panels functioning as a cathode (the "piece") and applying direct current. The coated panels were rinsed with water, air dried for a short time and then baked at 175 degrees C for 30 minutes to effect a curing of the coating.

Table I below indicates the properties of the coatings of Examples I, II and III.

TABLE 1

| Coating | Applied Voltage | Time Interval | Coating Thickness | Reverse Impact | Pencil Hardness | Overnight Spot Tests $H_2O$ | 20% | 37% |
|---|---|---|---|---|---|---|---|---|
| | | | | Inch-lbs | | | NaOH | $H_2SO_4$ |
| Example I | 100 | 60 sec | 0.5 mil | >80 | B | OK | OK | OK |
| Example II | 100 | 60 sec | 0.4 mil | >80 | HB | OK | OK | OK |
| Example III | 100 | 60 sec | 0.9 mil | >80 | B | OK | OK | OK |

As previously noted the voltage is applied as direct current. The pencil hardness test refers to the ability of the coating to withstand scratching by a pencil of the hardness shown in the table. The overnight spot tests are resistance to the various solvents as indicated obtained by applying a drop of the solvent and allowing it to stand overnight for a period of about sixteen hours on the surface of the coating.

The results of the testing shows the cured compositions to be exemplary. Substantially similar results are obtained by varying the compositions within the parameters previously shown.

Various other epoxide-amine adducts are also disclosed in US Patent No. 3716402, West German Auslegeschrift No. 2426996 and West German Offenlegungsschrift 2603666.

Throughout the specification and claims, percentages and ratios are by weight and temperatures are in degrees of Celsius unless otherwise indicated.

It is an object of the present invention to provide polyamines for use in the manufacture of products useful in cationic electrodeposition and in particular to provide triamines which may be used to form coating compositions with fully blocked polyisocyanates.

According to one aspect of the present invention we therefore provide polyamines of formula I

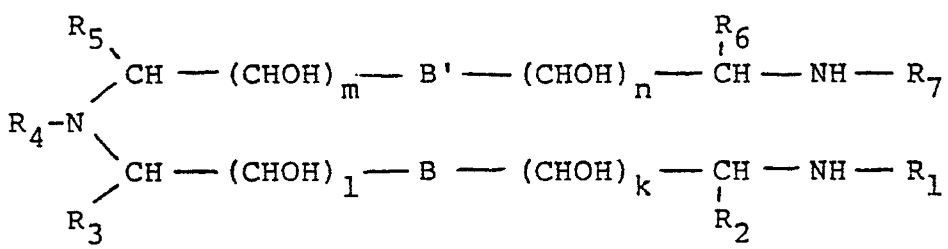

(I)

[wherein k, 1, m and n, which may be the same or different, each is an integer having the value 0 or 1, but preferably 1; $R_2$ $R_3$, $R_5$ and $R_6$, which may be the same or different, each represents a hydrogen atom or a hydroxymethyl group; $R_1$, $R_4$ and $R_7$, which may be the same or different, each represents an optionally substituted aliphatic group of molecular weight of up to 264 containing from 8 to 18 carbon atoms and being the residue of a fatty amine; and B and B′, which may be the same or different, each represents a divalent organic radical of molecular weight of from 256 to 1914, preferably containing one or more 1,4-phenylene or 1,4-cyclohexylene radicals; subject to the provisos that when k, 1, m or n is 0 then $R_2$, $R_3$, $R_5$ or $R_6$ respectively represents a hydroxymethyl group and that when k, 1, m or n is 1 then $R_2$, $R_3$, $R_5$ or $R_6$ respectively represents a hydrogen atom] of molecular weight of from 830 to 5600.

According to a further feature of the present invention we provide a process for the preparation of polyamines of formula I (as defined above), which process comprises reacting at least one difunctional epoxy compound of formula II

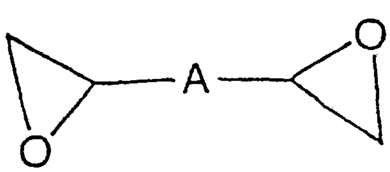

(II)

(wherein A represents a radical B or B′ as defined above) of average molecular weight of from 342 to 2000 with one, two or three primary fatty amines selected from amines of formulae III, IV and V

$R_1 - NH_2$ (III)
$R_4 - NH_2$ (IV)
$R_7 - NH_2$ (V)

(wherein $R_1$, $R_4$ and $R_7$ are as defined above); the molecular weight of the said primary amines being up to 280.

Within the process of the present invention the said difunctional epoxy compounds and primary fatty amines

conveniently are reacted together in a mole ratio of from 1.8:3 to 2.4:3.

The polyamines of the present invention may exist in different isomeric forms and all such isomers and mixtures thereof are within the scope of the present invention.

As previously noted, the present invention relates to compounds useful from which to form cationic compounds which may be used in cationic electrodeposition.

According to a yet further aspect of the present invention we therefore provide substituted ammonium or 1 and most desirably 0).

To obtain the proper degree of dispersion it is necessary that the average molecular weight of the difunctional epoxy compound be between about 342 and about 2,000, preferably from about 380 to about 500.

The second component in the process of the present invention is the primary fatty amine having a molecular weight of up to about 280, preferably up to 275. An example of such a primary fatty $C_{8-18}$ amine is stearyl amine. The amine contains from about 8 to about 18 carbon atoms therein to provide sufficient water resistance in the cured coating.

The polyamines of the present invention may be formed by reacting the difunctional epoxy compound and the primary fatty amine in a mole ratio of from 1.8:3 to 2.4:3, preferably from 1.9:3 to 2.1:3 and most preferably about 2:3 respectively. This reaction may be conducted in accordance with standard industrial practices.

The two terminal amines are secondary amines each containing one hydrogen atom still available for reaction and a fatty tail. The hydroxyl groups (for example $R_2$ or $(CHOH)_k$) are from the opening of the oxirane ring and are of course available for any reactant with which a hydroxyl would normally react.

In practice the invention is highly useful in that both the hydroxyl and the remaining secondary amine functionalities allow a high degree of crosslinking with an isocyanate as is later described. The positioning of the central tertiary amine in the above structure is also quite useful in that

**Claims** FOR THE CONTRACTING STATES: BE CH FR GB IT

LI NL SE

1. Polyamines of formula I

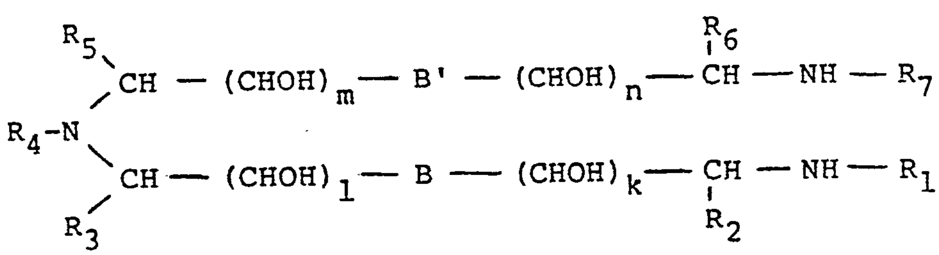

(I)

[wherein k, 1, m and n, which may be the same or different, each is an integer having the value 0 or 1; $R_2$, $R_3$, $R_5$ and $R_6$, which may be the same or different, each represents a hydrogen atom or a hydroxymethyl group; $R_1$, $R_4$ and $R_7$, which may be the same or different, each represents an optionally substituted aliphatic group of molecular weight of up to 264 containing from 8 to 18 carbon atoms and being the residue of a fatty amine; and B and B′, which may be the same or different, each represents a divalent organic radical of molecular weight of from 256 to 1914; subject to the provisos that when k, l, m or n is 0 then $R_2$, $R_3$, $R_5$ or $R_6$ respectively represents a hydroxymethyl group and that when k, l, m or n is 1 then $R_2$, $R_3$, $R_5$ or $R_6$ respectively represents a hydrogen atom] of molecular weight of from 830 to 5600.

2. Amines of formula I as claimed in claim 1 wherein k, l, m and n each is 1.

3. Amines of formula I as claimed in either of claims 1 and 2 wherein B and B′ represent divalent organic radicals each containing one or more 1,4-phenylene or 1,4-cyclohexylene radicals.

4. Amines of formula I as claimed in either of claims 1 and 2 wherein B and B′ each represents a divalent organic radical selected from the following:

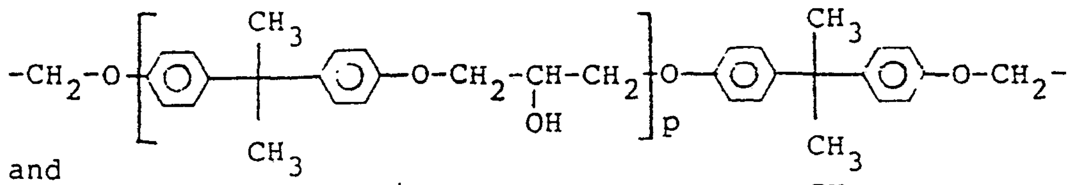

(VI)

and

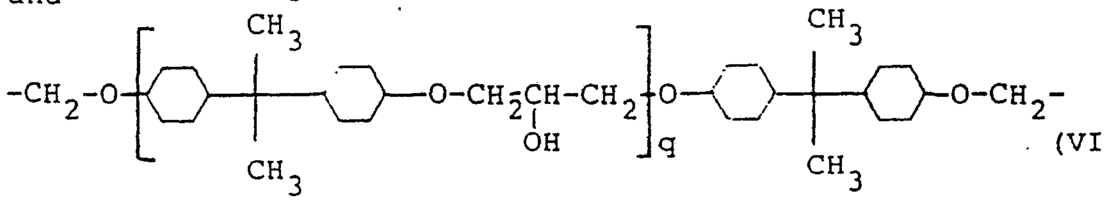

(VII)

(wherein p and q are integers having the values 0, 1 or 2).

5. Amines of formula I as claimed in claim 4 wherein B and B′ each represents a radical of formula VI as defined in claim 3 wherein p is 0.

6. Amines of formula I as claimed in claim 4 wherein B and B′ each represents a radical of formula VII as defined in claim 3 wherein q is 0.

7. Amines of formula I as claimed in any one of claims 1 to 6 wherein $R_1$, $R_4$ and $R_7$ each represents an oleyl group.

8. Substituted ammonium compounds produced by the neutralization or substantial neutralization of polyamines as claimed in any one of the preceding claims with lactic and/or acetic acids or the anhydrides thereof.

9. Substituted ammonium compounds as claimed in claim 8 in composition with a fully blocked polyisocyanate.

10. A process for the preparation of polyamines as claimed in any one of claims 1 to 7, which process comprises reacting at least one difunctional epoxy compound of formula II

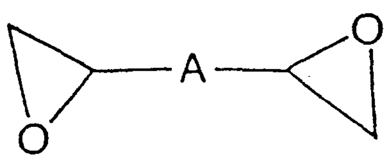

(II)

(wherein A represents a radical B or B′ as defined in claim 1) of average molecular weight of from 342 to 2000 with one, two or three primary fatty amines selected from amines of formulae III, IV and V

$R_1 - NH_2$ (III)

$R_4 - NH_2$ (IV)

$R_7 - NH_2$ (V)

(wherein $R_1$, $R_4$ and $R_7$ are as defined in claim 1); the molecular weight of the said primary amines being up to 280.

11. A process as claimed in claim 10 wherein the said epoxy compounds and the said amines are reacted together in a mole ratio of from 1.8:3 to 2.4:3.

12. A process as claimed in claim 11 wherein the said epoxy compounds and the said amines are reacted together in a mole ratio of from 1.9:3 to 2.1:3.

13. A process as claimed in any one of claims 10 to 12 wherein the said epoxy compounds are Bisphenol A and/or saturated Bisphenol A and the said primary amine is oleyl amine.

14. A process as claimed in any one of claims 10 to 13 effected under the action of heat and in the presence of a nitrogen blanket.

15. A method for the production of a cured piece, which method comprises the following steps:

(a) neutralizing polyamines as claimed in any one of claims 1 to 7 with an acidic material;

(b) mixing the neutralized substituted ammonium compounds as prepared in step (a) above with an amount of a fully blocked polyisocyanate sufficient to react with the remaining amine hydrogens and the hydroxyl groups present in the said neutralized compounds;

(c) applying the mixture as prepared in step (b) above to a piece functioning as a cathode in a bath through which an electric current is passing, and thereby forming a coating on the said piece; and

(d) removing the coated piece from the bath and applying a heat cure, and thereby producing the cured piece.

**Claims** FOR THE CONTRACTING STATE: AT

1. A process for the preparation of polyamines of molecular weight of from 830 to 5600 which process comprises reacting at least one difunctional epoxy compound of formula II

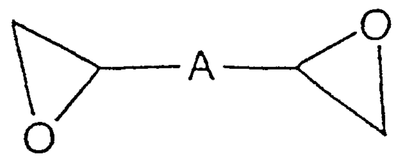

(II)

(wherein A represents a radical B or B'; and B and B', which may be the same or different, each represents a divalent organic radical of molecular weight of from 256 to 1914) of average molecular weight of from 342 to 2000 with one, two or three primary fatty amines selected from amines of formulae III, IV and

$R_1 - NH_2$ (III)
$R_4 - NH_2$ (IV)
$R_7 - NH_2$ (V)

(wherein $R_1$, $R_4$ and $R_7$, which may be the same or different, each represents an optionally substituted $C_{8\text{-}18}$ aliphatic group of molecular weight of up to 264); the molecular weight of the said primary amines being up to 280.

2. A process for the preparation of polyamines of formula I

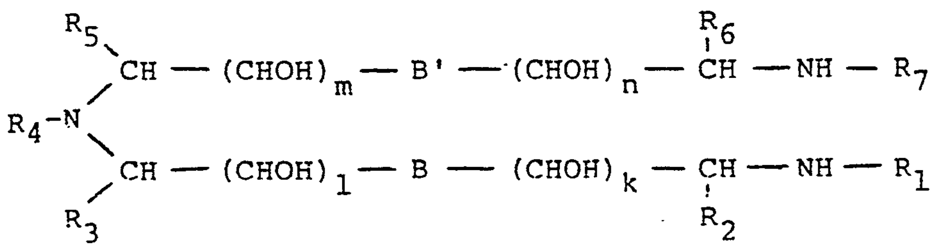

(I)

[wherein k, l, m and n, which may be the same or different, each is an integer having the value 0 or 1; $R_2$, $R_3$, $R_5$ and $R_6$, which may be the same or different, each represents a hydrogen atom or a hydroxymethyl group; $R_1$, $R_4$ and $R_7$, which may be the same or different, each represents an optionally substituted aliphatic group of molecular weight of up to 264 containing from 8 to 18 carbon atoms and being the residue of a fatty amine; and B and B', which may be the same or different, each represents a divalent organic radical of molecular weight of from 256 to 1914; subject to the provisos that when k, l, m or n is 0 then $R_2$, $R_3$, $R_5$ or $R_6$ respectively represents a hydroxymethyl group and that when k, l, m or n is 1 then $R_2$, $R_3$, $R_5$ or $R_6$ respectively represents a hydrogen atom] of molecular weight of from 830 to 5600, which process comprises reacting at least one difunctional epoxy compound of formula II

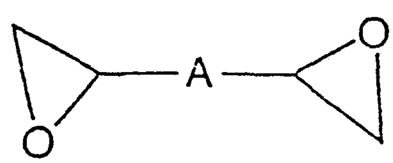

(II)

(wherein A represents a radical B or B' as hereinbefore defined) of average molecular weight of from 342 to 2000 with one, two or three primary fatty amines selected from amines of formulae III, IV and V

$R_1 - NH_2$ (III)
$R_4 - NH_2$ (IV)
$R_7 - NH_2$ (V)

(wherein $R_1$, $R_4$ and $R_7$ are as defined above); the molecular weight of the said primary amines being up to 280.

3. A process as claimed in either of claims 1 and 2 wherein the said epoxy compounds and the said amines are reacted together in a mole ratio of from 1.8:3 to 2.4:3.

4. A process as claimed in claim 3 wherein the said epoxy compounds and the said amines are reacted together in a mole ratio of from 1.9:3 to 2.1:3.

5. A process as claimed in any one of claims 1 to 4 effected under the action of heat and in the presence of a nitrogen blanket.

6. A process as claimed in any one of claims 1 to 5 wherein the said primary amines are oleyl amine.

7. A process as claimed in any one of claims 2 to 6 for the preparation of polyamines of formula I (as defined in claim 2) wherein k, 1, m and n each is 1.

8. A process as claimed in any one of claims 1 to 7 wherein in the said epoxy compounds of formula II (as defined in claim 1) the radicals B and B' represent divalent organic radicals each containing one or more 1,4-phenylene or 1,4-cyclohexylene radicals.

9. A process, as claimed in any one of claims 1 to 8 wherein in the said epoxy compounds of formula II (as defined in claim 1) the radicals B and B' each represents a divalent organic radical selected from the following:

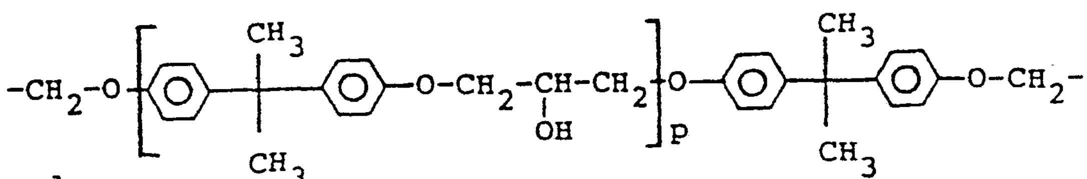

(VI)

and

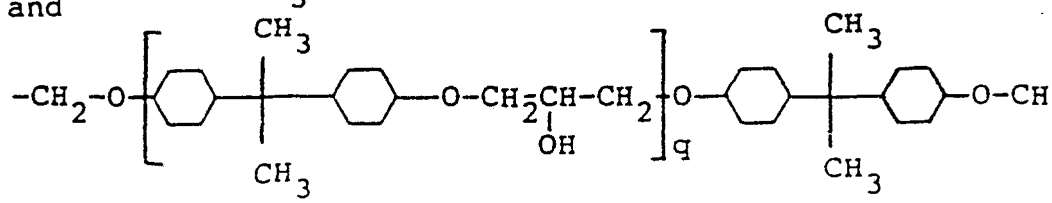

(VII)

(wherein p and q are integers having the values 0, 1 or 2).

10. A process as claimed in any one of claims 1 to 9 wherein the said epoxy compounds of formula II (as defined in claim 1) are Bisphenol A and/or saturated Bisphenol A.

11. A method for the production of a cured piece, which method comprises the following steps:

(a) neutralizing polyamines produced by a process as claimed in any one of claims 1 to 10 with an acidic material;

(b) mixing the neutralized substituted ammonium compounds as prepared in step (a) above with an amount of a fully blocked polyisocyanate sufficient to react with the remaining amine hydrogens and the hydroxyl groups present in the said neutralized compounds;

(c) applying the mixture as prepared in step (b) above to a piece functioning as a cathode in a bath through which an electric current is passing, and thereby forming a coating on the said piece; and

(d) removing the coated piece from the bath and applying a heat cure, and thereby producing the cured piece.

**Revendications**

Pour les Etats contractants: BE, CH, FR, GB, IT, NL, SE, LI.

1. Polyamines de formule I

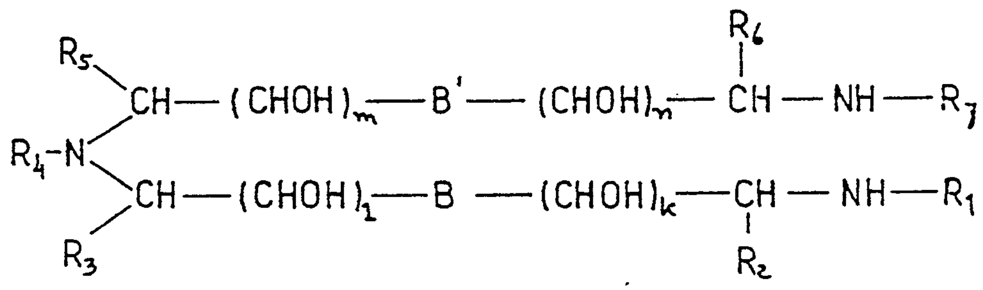

(I)

[où k, l, m et n, qui peuvent être semblables ou différents, représentent chacun un nombre entier ayant pour valeur 0 ou 1; $R_2$, $R_3$, $R_5$ et $R_6$ qui peuvent être semblables ou différents représentent chacun un atome d'hydrogène ou un groupe hydroxyméthyle; $R_1$, $R_4$ et $R_7$ qui peuvent être semblables ou différents représentent chacun un groupe aliphatique éventuellement substitué ayant un poids moléculaire jusqu'à 264, contenant 8 à 18 atoms de carbone et étant le résidu d'une amine grasse; et B et B', qui peuvent être semblables ou différents, représentent chacun un radical organique divalent ayant un poids moléculaire de 256 à 1 914 avec la restriction que lorsque k, l, m ou n est 0, $R_2$, $R_3$, $R_5$ ou $R_6$ représentent respectivement un groupe hydroxyméthyle et que lorsque k, l, m ou n est 1, $R_2$, $R_3$, $R_5$ ou $R_6$ représentent respectivement un atome d'hydrogène ] ayant un poids moléculaire de 830 à 5 600.

2. Amines de formule I comme revendiqué dans la revendication 1, dans lesquelles k, l, m et n sont chacun 1.

3. Amines de formule 1 comme revendiqué dans l'une quelconque des revendications 1 à 2, dans lesquelles B et B' représentent des radicaux organiques divalents contenant chacun un ou plusieurs radicaux 1,4-phénylène ou 1,4-cyclohexylène.

4. Amines de formule 1 comme revendiqué dans l'une quelconque des revendications 1 à 2, dans lesquelles B et B' représentent chacun un radical organique divalent choisi parmi les suivants:

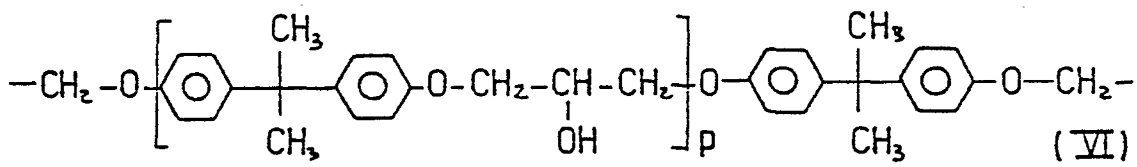

(VI)

en

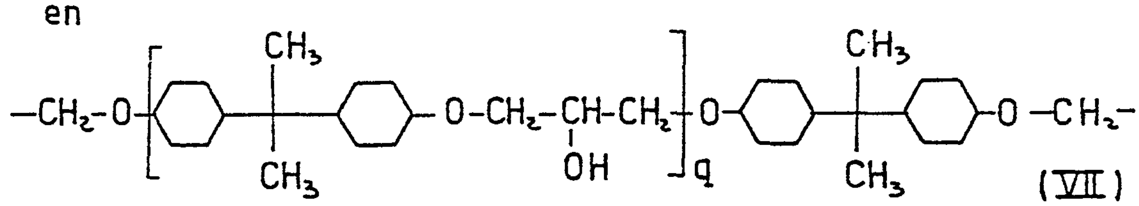

(VII)

(ou p et q sont des nombres entiers ayant pour valeur 0, 1 ou 2).

5. Amines de formule I comme revendiqué dans la revendication 4 dans lesquelles B et B' représentent chacun un radical de formule VI comme défini dans la revendication 3 où p est 0.

6. Amines de formule 1 comme revendiqué dans la revendication 4, dans lesquelles B et B' représentent chacun un radical de formule VII comme défini dans la revendication 3 où q est 0.

7. Amines de formule I comme revendiqué dans l'une quelconque des revendications 1 à 6, dans lesquelles $R_1$, $R_4$ et $R_7$ représentent chacun un groupe oléyle.

8. Composés ammonium substitués produits par neutralisation ou quasi-neutralisation de polyamines comme revendiqué dans l'une quelconque des revendications précédentes, avec les acides lactique et/ou acétique ou leurs anhydrides.

9. Composés ammonium substitués comme revendiqué dans la revendication 8 en composition avec un polyisocyanate entièrement bloqué.

10. Procédé pour la préparation de polyamines comme revendiqué dans l'une quelconque des revendications 1 à 7, ce procédé comprenant la réaction d'au moins un composé époxy difonctionnel de formule II

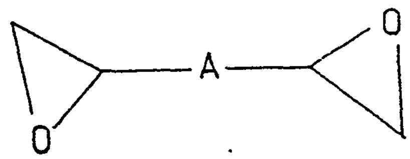

(II)

(où A représente un radical B ou B' comme défini dans la revendication 1) ayant un poids moléculaire moyen de 342 à 2 000 avec une, deux ou trois amines primaires grasses choisies parmi les amines de formules III, IV et V

$R_1--NH_2$ (III)

$R_4--NH_2$ (IV)

$R_7--NH_2$ (V)

(où $R_1$, $R_4$ et $R_7$ sont comme défini dans la revendication 1); le poids moléculaire desdites amines primaires étant jusqu'à 280.

11. Un procédé comme revendiqué dans la revendication 10 dans lequel on fait réagir ensemble lesdits composés époxy et lesdites amines dans un rapport molaire de 1,8/3 à 2,4/3.

12. Un procédé comme revendiqué dans la revendication 11, dans lequel on fait réagir ensemble lesdits composé époxy et lesdites amines dans un rapport molaire de 1,9/3 à 2,1/3.

13. Un composé comme revendiqué dans l'une quelconque des revendications 10 à 12, dans lequel lesdits composés époxy sont le bisphénol A et/ou le bisphénol A saturé et ladite amine primaire est l'oléylamine.

14. Un procédé comme revendiqué dans l'une quelconque des revendications 10 à 13 effectué sous l'action de la chaleur et en présence d'une protection d'azote.

15. Procédé pour la production d'une pièce durcie, ce procédé comprenant les stades suivants:

(a) neutralisation de polyamines comme revendiqué dans l'une quelconque des revendications 1 à 7 avec une matière acide;

(b) mélange des composés ammonium substitués neutralisés comme préparé dans le stade (a) ci-dessus avec une quantité d'un polyisocyanate entièrement bloqué suffisante pour réagir avec les hydrogènes d'amine et les groupes hydroxy restants présents dans lesdits composés neutralisés;

(c) application du mélange comme préparé dans le stade (b) cidessus à une pièce fonctionnant comme une cathode dans un bain à travers lequel un courant électrique passe, pour former un revêtement sur ladite pièce; et

(d) enlèvement de la pièce revêtue du bain et application d'un durcissement par la chaleur pour produire ainsi la pièce durcie.

**Revendications** pour l'Etat contractant: AT.

1. Un procédé pour la préparation de polyamines ayant un poids moléculaire de 830 à 5 600, ce procédé comprenant la réaction d'au moins un composé époxy difonctionnel de formule II

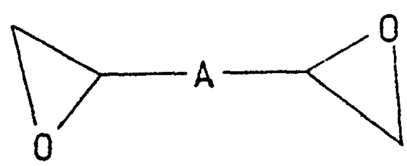

(II)

(où A représente un radical B ou B'; et B et B' qui peuvent être semblables ou différents, représentent chacun un radical organique divalent ayant un poids moléculaire de 256 à 1 914) ayant un poids moléculaire moyen de 342 à 2 000 avec une, deux ou trois amines primaires grasses choisies parmi les amines de formule III, IV et V

$R_1---NH_2$ (III)

$R_4---NH_2$ (IV)

$R_7---NH_2$ (V)

(où $R_1$, $R_4$ et $R_7$, qui peuvent être semblables ou différents réprésentent chacun un groupe aliphatique éventuellement substitué, contenant 8 à 18 atomes de carbone et ayant un poids moléculaire jusqu'à 264; le poids moléculaire desdites amines primaires étant jusqu'à 280.

2. Un procédé pour la préparation de polyamines de formule I

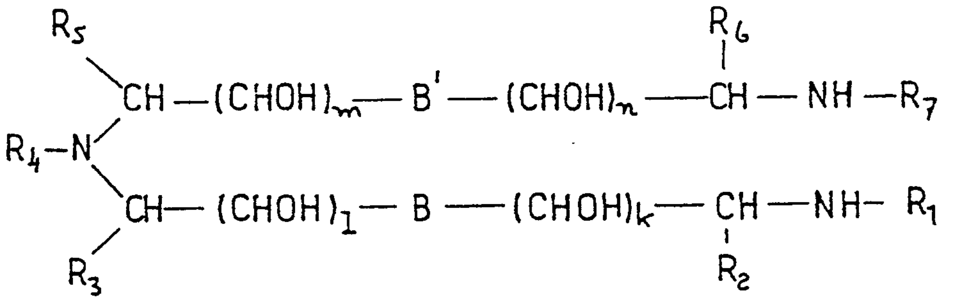

(I)

[ où k, 1, m et n, qui peuvent être semblables ou différents représentent chacun un nombre entier ayant pour valeur 0 ou 1; $R_2$, $R_3$, $R_5$ et $R_6$ qui peuvent être semblables ou différents, représentent chacun un atome d'hydrogène ou un groupe hydroxyméthyle; $R_1$, $R_4$ et $R_7$ qui peuvent être semblables ou différents, représentent chacun un groupe aliphatique éventuellement substitué ayant un poids moléculaire jusqu'à 264, contenant 8 à 18 atomes de carbone et étant le résidu d'une amine grasse; et B et B' qui peuvent être semblables ou différents représentent chacun un radical organique divalent ayant un poids moléculaire de 256 à 1 914; avec la restruction que lorque k, l, m ou n est O, $R_2$, $R_3$, $R_5$ ou $R_6$ représentent respectivement un groupe hydroxy-méthyle et que lorsque k, l, m ou n est 1, $R_2$, $R_3$, $R_5$ ou $R_6$ représentent respectivement un atome d'hydrogène ] ayant un poids moléculaire de 830 à 5 600, ce procédé comprenant la réaction d'au moins un composé époxy difonctionnel de formule II:

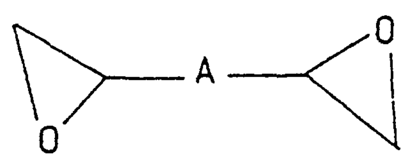

(II)

(où A représente un radical B ou B' comme précédemment défini) ayant un poids moléculaire moyen de 342 à 2 000 avec une, deux ou trois amines primaires grasses choisies parmi les amines de formules III, IV et V

$R_1$– – – –$NH_2$ (III)

$R_4$ – – – $NH_2$ (IV)

$R_1$ – – – $NH_2$ (V)

(où $R_1$, $R_4$ et $R_7$ sont comme défini ci-dessus); le poids moléculaire desdites amines primaines étant jusqu'à 280.

3. Un procédé comme revendiqué dans l'une des revendications 1 et 2, dans lequel on fait réagir ensemble lesdits composés epoxy et lesdites amines dans un rapport molaire de 1,8/3 à 2,4/3.

4. Un procédé comme revendiqué dans la revendication 3 dans lequel on fait réagir ensemble lesdits composés époxy et lesdites amines dans un raport molaire de 1,9/3 à 2,1/3.

5. Un procédé comme revendiqué dans l'une quelconque des revendications 1 à 4 effectyé sous l'action de la chaleur et en présence d'une protection d'azote.

6. Un procédé comme revendiqué dans l'une quelconque des revendications 1 à 5 dans lequel lesdites amines primaires sont l'oléylamine.

7. Un procédé comme revendiqué dans l'une quelconque des revendications 2 à 6 pour la préparation de polyamines de formule I (comme défini dans la revendication 2) ou k, l, m et n sont chacun 1.

8. Un procédé comme revendiqué dans l'une quelconque des revendications 1 à 7 dans lequel dans lesdits composés époxy de formule II (comme défini dans la revendication 1) les radicaux B et B' représentent des radicaux organiques divalents contenant chacun un ou plusieurs radicaux 1,4-phénylène ou 1,4-cyclohexylène.

9. Un procédé comme revendiqué dans l'une quelconque des revendications 1 à 8, selon lesquelles dans lesdits composés époxy de formule II (comme défini dans la revendication 1) les radicaux B et B' représentent chacun un radical organique divalent choisi parmi les suivants:

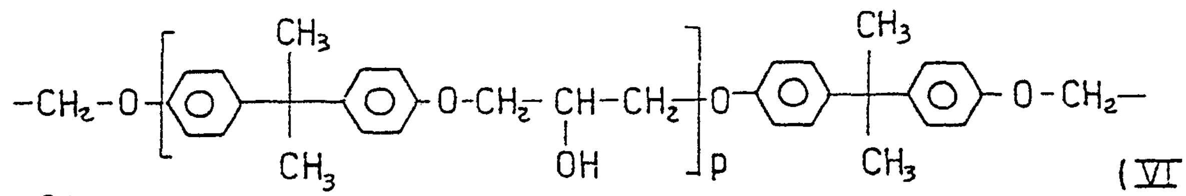

(VI)

en

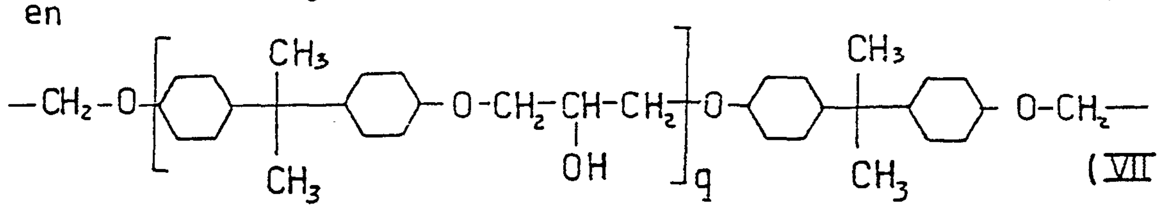

(VII)

(où p et q sont des nombres entiers ayant pour valeur 0, 1 ou 2.

10. Un procédé comme revendiqué dans l'une quelconque des revendications 1 à 9 dans lequel lesdits composés époxy de formule II (comme défini dans la revendication 1) sont le bisphénol A et/ou le bisphénol A saturé.

11. Un procédé pour la production d'une pièce durcie, ce procédé comprenant les stades suivantes:

(a) neutralisation de polyamines produites selon un procédé comme revendiqué dans l'une quelconque des revendications 1 à 10 avec une matière acide;

(b) mélange des composés ammonium substitués neutralisés comme préparé dans le stade (a) ci-dessus, avec une quantité d'un polyisocyanate entièrement bloqué suffisante pour réagir avec les hydrogènes d'amine et les groupes hydroxy restants présents dans lesdits composés neutralisés;

(c) application du mélange comme préparé dans le stade (b) ci-dessus à une pièce fonctionnant comme une cathode dans un bain à travers lequel passe un courant électrique, pour former ainsi un revêtement sur ladite pièce; et

(d) retrait de la pièce revêtue du bain et application d'un durcissement par la chaleur pour produire la pièce durcie.

**Patentansprüche**

für BE CH FR GB IT LI NL SE die Vertragsstaaten

1. Polyamine der Formel (I)

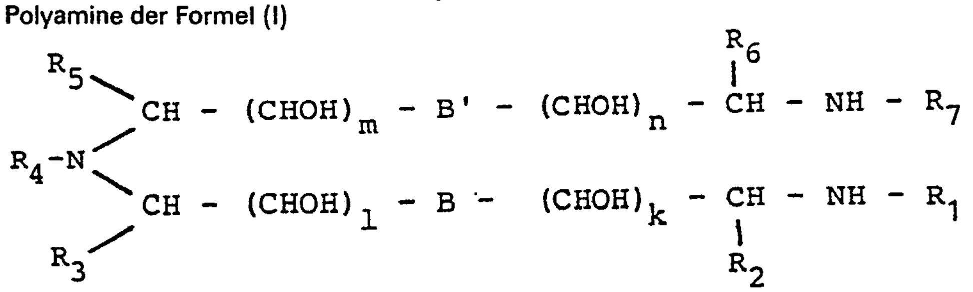

, (I)

worin k, l, m und n, die gleich oder verschieden sein können, jeweils eine ganze Zahl mit dem Wert Null oder 1 sind; $R_2$, $R_3$, $R_5$ und $R_6$, die gleich oder verschieden sein können, jeweils ein Wasserstoffatom oder eine Hydroxymethylgruppe darstellen; $R_1$, $R_4$ und $R_7$, die gleich oder verschieden sein können, jeweils eine gegebenenfalls substituierte aliphatische Gruppe mit 8 bis 18 C-Atomen und mit einem Molgewicht von bis zu 264 bedeuten und der Rest eines Fettamins sind; und B und B', die gleich oder verschieden sein können, jeweils einen zweiwertigen organischen Rest mit einem Molgewicht von 256 bis 1914 darstellen; mit den Maßgaben, daß, wenn k, 1, m oder n Null ist, $R_2$, $R_3$, $R_5$ bzw. $R_6$ jeweils eine Hydroxymethylgruppe darstellt, und daß, wenn k, l, m oder n 1 ist, $R_2$, $R_3$, $R_5$ bzw. $R_6$ ein Wasserstoffatom bedeutet, mit einem Molgewicht von 830 bis 5600.

2. Amine der Formel (I), wie in Anspruch 1 beansprucht, worin k, l, m und n jeweils 1 sind.

3. Amine der Formel (I), wie in einem der Ansprüche 1 und 2 beansprucht, worin B und B' zweiwertige organische Reste darstellen, die jeweils einen oder mehrere 1,4-Phenylen- oder 1,4-Cyclohexylenreste darstellen.

4. Amine der Formel (I), wie in einem der Ansprüche 1 und 2 beansprucht, worin B und B' jeweils einen zweiwertigen organischen Rest ausgewählt unter den folgenden

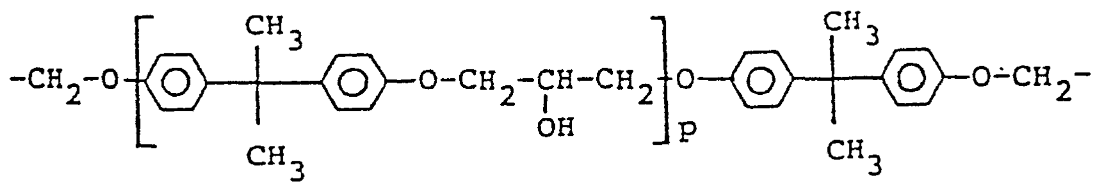

(VI)

und

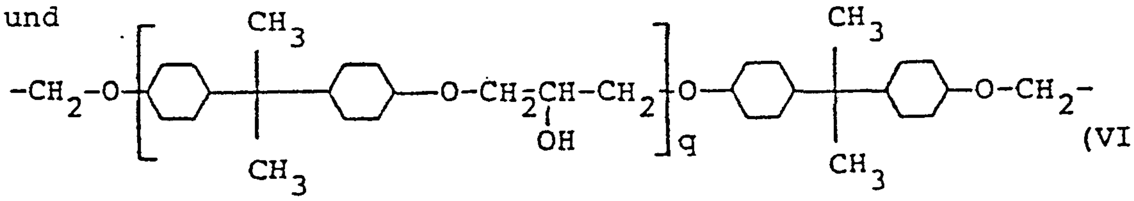

(VII),

worin p und q ganze Zahlen mit den Werten Null, 1 oder 2 sind, darstellen.

5. Amine der Formel (I), wie in Anspruch 4 beansprucht, worin B und B' jeweils einen Rest der Formel (VI), wie in Anspruch 3 definiert, worin p Null ist, darstellen.

6. Amine der Formel (I), wie in Anspruch 4 beansprucht, worin B und B' jeweils einen Rest der Formel (VII), wie in Anspruch 3 definiert, worin q Null ist, darstellen.

7. Amine der Formel (I), wie in einem der Ansprüche 1 bis 6 beansprucht, worin $R_1$, $R_4$ und $R_7$ jeweils eine Oleylgruppe darstellen.

8. Substituierte Ammoniumverbindungen, hergestellt durch Neutralisation oder wesentliche Neutralisation von Polyaminen, wie in einem der vorhergehenden Ansprüche beansprucht, mit Milch-und/oder Essigsäure oder deren Anhydriden.

9. Substituierte Ammoniumverbindungen, wie in Anspruch 8 beansprucht, in Verbindung mit einem voll geschützten Polyisocyanat.

10. Verfahren zur Herstellung von Polyaminen, wie in einem der Ansprüche 1 bis 7 beansprucht, welches Verfahren die Umsetzung zumindest einer difunktionellen Epoxyverbindung der Formel (II)

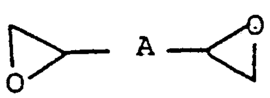

(II),

worin A einen Rest B oder B', wie in Anspruch 1 definiert, darstellt, mit einem mittleren Molgewicht von 342 bis 2000 mit einem, zwei oder drei primären Fettaminen ausgewählt unter Aminen der

Formeln (III), (IV) und (V)

$R_1 - NH_2$ (III)

$R_4 - NH_2$ (IV)

$R_7 - NH_2$ (V),

worin $R_1$, $R_4$ und $R_7$ wie in Anspruch 1 definiert sind, wobei das Molgewicht der genannten primären Amine bis zu 280 beträgt, umfaßt.

11. Verfahren, wie in Anspruch 10 beansprucht, worin die genannten Epoxyverbindungen und die genannten Amine miteinander in einem Molverhältnis von 1,8: 3 bis 2,4: 3 umgesetzt werden.

12. Verfahren, wie in Anspruch 11 beansprucht, worin die genannten verhältnis von 1,9: 3 bis 2,1: 3 umgesetzt werden.

13. Verfahren, wie in einem der Ansprüche 10 bis 12 beansprucht, worin die genannten Epoxyverbindungen Bisphenol A und/oder gesättigtes Bisphenol A und das genannte primäre Amin Oleylamin sind.

14. Verfahren, wie in einem der Ansprüche 10 bis 13 beansprucht, durchgeführt unter der Einwirkung von Wärme und in Anwesenheit einer Stickstoffdecke.

15. Verfahren zur Herstellung eines gehärteten Stückes, welches Verfahren die folgenden Schritte umfaßt:

(a) Neutralisieren von Polyaminen, wie in einem der Ansprüche 1 bis 7 beansprucht, mit einem sauren Material;

(b) Mischen der neutralisierten substituierten Ammoniumverbindungen, wie in Schritt (a) hergestellt, mit einer Menge eines voll geschützten Polyisocyanats, die ausreicht, um mit den übrigen Aminwasserstoffatomen und den Hydroxylgruppen, die in den genannten neutralisierten Verbindungen vorhanden sind, zu reagieren;

(c) Aufbringen der Mischung, wie in obigen Schritt (b) hergestellt, auf ein Stück, das in einem Bad als Kathode wirkt, durch welches elektrischer Strom geleitet wird, wodurch auf dem genannten Stück ein Überzug

gebildet wird, und

(d) Entfernen des überzogenen Stückes aus dem Bad und Anwenden einer Wärmehärtung, wodurch das gehärtete Stück gebildet wird.

**Patentansprüche:**

für den Vertragsstaat: AT

1. Verfahren zur Herstellung von Polyaminen mit einer Molmasse von 830 bis 5600, welches Verfahren die Umsetzung zumindest einer difunktionellen Epoxyverbindung der Formel (II)

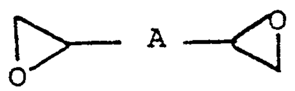

(II)

worin A einen Rest B oder B′ darstellt und B und B′, die gleich oder verschieden sein können, jeweils einen zweiwertigen organischen Rest mit einer Molmasse von 256 bis 1914 bedeuten, mit einer mittleren Molmasse von 342 bis 2000 mit einem, zwei oder drei primären Fettaminen ausgewählt unter Aminen der Formeln (III), (IV) und (V)

$R_1 - NH_2$ (III)

$R_4 - NH_2$ (IV)

$R_7 - NH_2$ (V),

worin $R_1$, $R_4$ und $R_7$, die gleich oder verschieden sein können, jeweils eine gegebenenfalls substituierte aliphatische $C_{8\text{-}18}$-Gruppe mit einer Molmasse von bis zu 264 darstellen, wobei die Molmasse der genannten primären Amine bis zu 280 beträgt, umfaßt.

2. Verfahren zur Herstellung von Polyaminen der Formel (I)

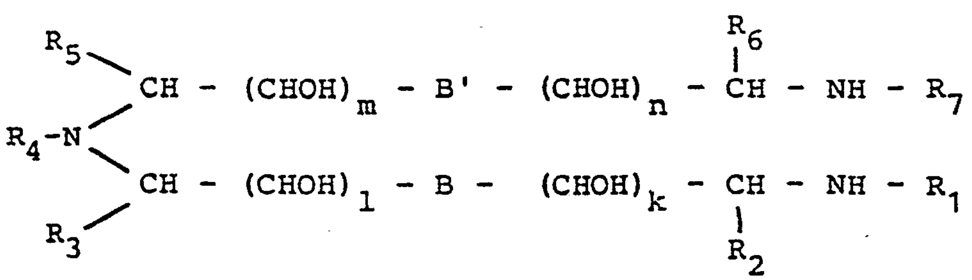

, (I)

worin k, l, m und n, die gleich oder verschieden sein können, jeweils eine ganze Zahl mit dem Wert Null oder 1 sind; $R_2$, $R_3$, $R_5$ und $R_6$, die gleich oder verschieden sein können, jeweils ein Wasserstoffatom oder eine Hydroxymethylgruppe darstellen; $R_1$, $R_4$ und $R_7$, die gleich oder verschieden sein können, jeweils eine gegebenenfalls substituierte aliphatische Gruppe mit einer Molmasse von bis zu 264 und 8 bis 18 C-Atomen bedeuten und den Rest eines Fettamins darstellen; und B und B′, die gleich oder verschieden sein können, jeweils einen zweiwertigen organischen Rest mit einer Molmasse von 256 bis 1914 darstellen; mit den Maßgaben, daß, wenn k, l, m oder n Null ist, $R_2$, $R_3$, $R_5$ bzw. $R_6$ jeweils eine Hydroxymethylgruppe darstellt, und daß, wenn k, l, m oder n 1 ist, $R_2$, $R_3$, $R_5$ bzw. $R_6$ ein Wasserstoffatom bedeutet, mit einer Molmasse von 830 bis 5600, welches Verfahren die Umsetzung zumindest einer difunktionellen Epoxyverbindung der Formel (II)

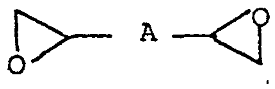 (II)

worin A einen Rest B oder B', wie oben definiert, darstellt, mit einer mittleren Molmasse von 342 bis 2000 mit einem, zwei oder drei primären Fettaminen ausgewählt unter Aminen der Formeln (III), (IV) und (V)

$R_1 - NH_2$ (III)
$R_4 - NH_2$ (IV)
$R_7 - NH_2$ (V),

worin $R_1$, $R_4$ und $R_7$ wie oben definiert sind, wobei die Molmasse der genannten primären Amine bis zu 280 beträgt, umfaßt.

3. Verfahren nach Anspruch 1 oder 2, worin die genannten Epoxyverbindungen und die genannten Amine miteinander in einem Molverhältnis von 1,8: 3 bis 2,4: 3 umgesetzt werden.

4. Verfahren nach Anspruch 3, worin die genannten Epoxyverbindungen und die genannten Amine miteinander in einem Molverhältnis von 1,9: 3 bis 2,1: 3 umgesetzt werden.

5. Verfahren nach einem der Ansprüche 1 bis 4, welches unter der Einwirkung von Wärme und in Anwesenheit einer Stickstoffdecke bewirkt wird.

6. Verfahren nach einem der Ansprüche 1 bis 5, worin die genannten primären Amine Oleylamin sind.

7. Verfahren nach einem der Ansprüche 2 bis 6 zur Herstellung von Polyaminen der Formel (I), wie in Anspruch 2 definiert, worin k, l, m und n jeweils 1 sind.

8. Verfahren nach einem der Ansprüche 1 bis 7, wobei in den genannten Epoxyverbindungen der Formel (II) (wie in Anspruch 1 definiert) die Reste B und B' zweiwertige organische Reste bedeuten, die jeweils einen oder mehrere 1,4-Phenylen- oder 1,4-Cyclohexylenreste darstellen.

9. Verfahren nach einem der Ansprüche 1 bis 8, wobei in den genannten Epoxyverbindungen der Formel (II) (wie in Anspruch 1 definiert) die Reste B und B' jeweils einen zweiwertigen organischen Rest ausgewählt unter den folgenden

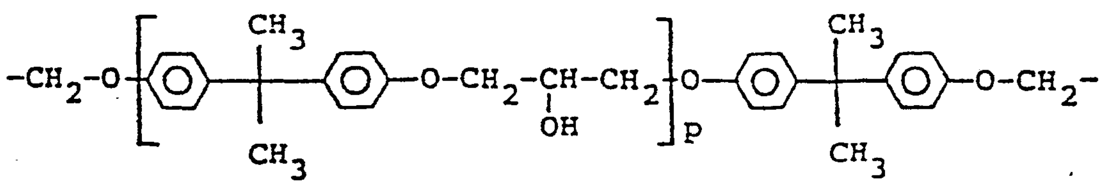 (VI)

und

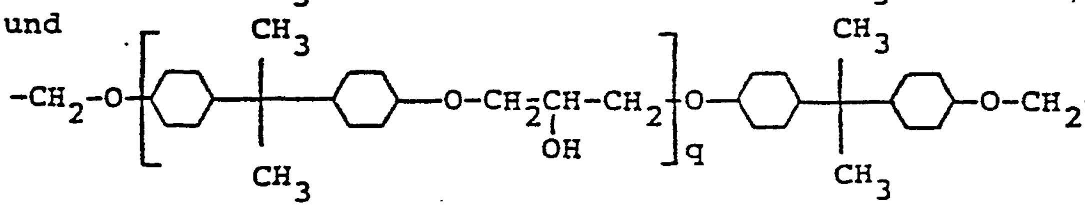 (VII),

worin p und q ganze Zahlen mit den Werten Null, 1 oder 2 sind, darstellen.

10. Verfahren nach einem der Ansprüche 1 bis 9, worin die genannten Epoxyverbindungen der Formel (II) (wie in Anspruch 1 definiert) Bisphenol A und/oder gesättigtes Bisphenol A sind.

11. Verfahren zur Herstellung eines gehärteten Stückes, welches Verfahren die folgenden Schritte umfaßt:

(a) Neutralisieren von Polyaminen, hergestellt durch ein Verfahren, wie in einem der Ansprüche 1 bis 10 beansprucht, mit einem sauren Material;

(b) Mischen der neutralisierten substituierten Ammoniumverbindungen, wie in obigem Schritt (a) hergestellt, mit einem Anteil eines voll blockierten Polyisocyanats, der ausreicht, um mit den übrigen Aminwasserstoffatomen und den Hydroxylgruppen, die in den genannten neutralisierten Verbindungen vorhanden sind, zu reagieren;

(c) Aufbringen der Mischung, wie in obigem Schritt (b) hergestellt, auf ein Stück, das in einem Bad als Kathode wirkt, durch welches ein elektrischer Strom geleitet wird, wodurch ein Überzug auf dem genannten Stück gebildet wird; und

(d) Entfernen des überzogenen Stückes aus dem Bad und Anwenden einer Wärmehärtung und dadurch Bilden des gehärteten Stückes.